# EUROPÄISCHE PATENTSCHRIFT

(11) **EP 3 318 384 B1**
(45) Veröffentlichungstag und Bekanntmachung des Hinweises auf die Patenterteilung: **07.07.2021**
(21) Anmeldenummer: 17196067.7
(22) Anmeldetag: 12.10.2017
(51) Int. Cl.: B29C 45/17, B29C 33/30, B29C 44/12, B29C 44/42, B29C 44/58

(54) **WERKZEUGTRÄGER UND FERTIGUNGSANLAGE MIT EINEM DERARTIGEN WERKZEUGTRÄGER**
TOOL CARRIER AND MANUFACTURING FACILITY WITH SUCH A TOOL CARRIER
PORTE-OUTIL ET INSTALLATION DE FABRICATION AVEC UN TEL PORTE-OUTIL

(30) Priorität: 01.11.2016 DE 102016120788
(43) Veröffentlichungstag der Anmeldung: 09.05.2018
(73) Patentinhaber: Josef Weischer GmbH & Co. KG, 48282 Emsdetten (DE)
(72) Erfinder: Hune, Rupert, 49090 Osnabrück (DE)
(74) Vertreter: Dr. Binder & Binder GbR

(56) Entgegenhaltungen:
- EP-A1- 3 037 237
- EP-A2- 0 841 139
- CN-A- 105 965 754
- DE-A1-102010 002 896
- DE-A1-102013 204 801
- DE-U1-202014 106 196
- JP-A- 2006 088 671
- US-A- 4 500 274
- US-A1- 2003 077 355
- US-A1- 2015 266 284

## Beschreibung

Die Erfindung betrifft einen Werkzeugträger und eine Fertigungsanlage mit einem derartigen Werkzeugträger.

Aus der DE 20 2014 106 196 U1 ist bereits eine Fertigungsanlage und sinngemäß auch ein Verfahren zur Herstellung eines Verbundwerkstückes mittels einer stoffschlüssigen Verbindung zwischen einem Träger, einer Formhaut und einer zwischen Träger und Formhaut angeordneten Schaumstoffschicht bekannt. Der Träger, die Formhaut und die Schaumstoffschicht bilden hierbei das Verbundwerkstück, wobei der Träger und die Formhaut somit Bauelemente beziehungsweise Bauteile des Verbundwerkstückes sind. Die Fertigungsanlage weist nach der Druckschrift mehrere, im Aufbau gleiche oder gleichartige Fertigungswerkzeuge auf, wobei jedes der Fertigungswerkzeuge aus einem Werkzeugunterteil und einem lösbar und/oder um eine Drehachse schwenkbar mit dem Werkzeugunterteil verbundenen Werkzeugoberteil besteht. Das Werkzeugoberteil ist dabei jeweils zur Aufnahme des Trägers und das Werkzeugunterteil zur Einbringung der Formhaut geeignet, wobei auf die Formhaut ein ursprünglich flüssiges Reaktionsgemisch, also beispielsweise Polyol und Isocyanat, aufgebracht wird, das anschließend zu einer Polyurethan-Schaumstoffschicht aushärtet. Dadurch werden der Träger, die Formhaut und die Schaumstoffschicht nach dem Schließen des Fertigungswerkzeugs miteinander verbunden. Verbundwerkstücke der hier betroffenen Art können beispielsweise als Armaturenbrett eines Kraftfahrzeuges zum Einsatz kommen.

Darüber hinaus wird in der DE 20 2014 106 196 U1 beschrieben, dass wenigstens ein, vorzugsweise jedoch zwei, programmgesteuerte Roboter zum Einsatz kommen. Wenigstens einer der Roboter verfügt dabei über mindestens einen Roboterarm zur Bewegung des gesamten, aus Werkzeugunterteil und Werkzeugoberteil bestehenden Fertigungswerkzeugs in unterschiedlichen Bewegungsrichtungen und stellt somit einen Werkzeugroboter dar. Das Werkzeugoberteil und das Werkzeugunterteil können mittels des Werkzeugroboters in jeder Bewegungsrichtung voneinander getrennt oder miteinander verbunden werden. Da bei jedem der zum Einsatz kommenden Fertigungswerkzeuge das Werkzeugunterteil und das Werkzeugoberteil lösbar miteinander verbunden sind, kann dadurch erreicht werden, dass keine Stillstandszeiten entstehen. Die Werkzeugunterteile beziehungsweise Werkzeugoberteile können auf diese Weise nämlich unabhängig voneinander bestückt werden. Der zweite Roboter dient lediglich der Aufbringung der Schaumstoffschicht auf die Formhaut und bildet somit einen Schäumroboter. Dabei ist es wichtig, zu erkennen, dass gemäß dem Offenbarungsgehalt der DE 20 2014 106 196 U1 ein lediglich aus dem Werkzeugoberteil und dem Werkzeugunterteil bestehendes Fertigungswerkzeug zum Einsatz kommt, das in der Regel aus einem Aluminiumswerkstoff hergestellt ist und somit aufgrund seiner verhältnismäßig geringen Baugröße problemlos durch den Werkzeugroboter betätigt, insbesondere geöffnet und geschlossen werden kann. Die US 2003/077355 A1 beschreibt im Wortsinn der Erfindung einen Werkzeugträger, mit einem Werkzeugträgeroberteil, in dem ein Werkzeugoberteil aufgenommen ist und mit einem lösbar mit dem Werkzeugträgeroberteil koppelbaren Werkzeugträgerunterteil, in dem ein Werkzeugunterteil aufgenommen ist, wobei das Werkzeugoberteil und das Werkzeugunterteil gemeinsam ein Fertigungswerkzeug zur Herstellung eines Verbundwerkstückes mit mindestens einer durch ein aufschäumendes Reaktionsgemisch gebildeten Schaumstoffschicht bilden und der Werkzeugträger um eine Achse schwenkbar in einem Schwenkrahmen gelagert ist, gemäß dem Oberbegriff des Anspruchs 1. Bei diesem Werkzeugträger sind jedoch die beiden Werkzeugträgerhälften um eine gemeinsame Achse schwenkbar und dadurch sozusagen lediglich auf und zu klappbar. Eine Bewegung in vertikaler Richtung ohne Verschwenken der Werkzeugträgerhälften ist hierbei nicht möglich.

Darüber hinaus geht aus der US 2015/266284 A1 eine vollautomatische Fertigungsanlage zur Herstellung eines Verbundwerkstückes hervor, die einen an einem Fertigungswerkzeug vorhandenen Werkzeugwechsler zur Ankopplung eines Werkzeugroboters aufweist. Der Werkzeugroboter verfügt über einen Roboterarm, der um mehrere Achsen schwenkbar ausgeführt ist.

Schließlich offenbart die US 4 500 274 A ganz allgemein eine Schnellwechsel- und/oder Schnellspannvorrichtung für Formwerkzeuge von Spritzgussmaschinen, bei denen die beiden Formhälften zwischen zwei, sich gegenüberliegenden, wahlweise aufeinander zu und voneinander weg bewegbaren Formaufspannplatten ausrichtbar und in ihrer Ausrichtlage über Klemmorgane aneinander fixierbar sind.

Überschreitet ein Fertigungswerkzeug jedoch eine gewisse Baugröße, wird es erforderlich, das Fertigungswerkzeug aus Stabilitätsgründen in einem Werkzeugträger aufzunehmen. Der Werkzeugträger besteht aus einem Werkzeugträgeroberteil, in dem das Werkzeugoberteil aufgenommen ist und aus einem Werkzeugträgerunterteil mit dem darin eingesetzten Werkzeugunterteil. Der Werkzeugträger wird bislang aus massivem Stahlwerkstoff hergestellt und weist folglich zusammen mit dem darin aufgenommenen Fertigungswerkzeug ein erhebliches Gewicht auf, das nicht mehr mit einem Werkzeugroboter bewegt werden kann. Insofern sind bei bekannten Ausführungen derartiger Werkzeugträger aufwändige Hydraulik-, elektrische- oder pneumatische Einrichtungen erforderlich, um eine Bewegung der Werkzeugträgerhälften zu erreichen und damit das Fertigungswerkzeug zu öffnen beziehungsweise zu schließen. Die erwähnten Zusatzaggregate bringen jedoch einen erheblichen Fertigungs- und Steuerungsaufwand für eine derartige Anlage mit sich, so dass die Anschaffungskosten sehr hoch sind.

Als weiteren Stand der Technik wird noch auf die Druckschriften EP 0 841 139 A2 und DE 10 2013 204 801 A1 verwiesen. Bei den dort gezeigten Werkzeugträgern werden die beiden Hälften zum Öffnen und Schließen ebenfalls lediglich um eine gemeinsame Achse geschwenkt beziehungsweise auf- und zugeklappt. Eine Bewegung in vertikaler Richtung wird dabei nicht ausgeführt.

Der Erfindung liegt die Aufgabe zugrunde, einen Werkzeugträger bereitzustellen, der einen Gewicht sparenderen, einfacheren Aufbau und geringere Herstellungskosten aufweist, als bislang bekannte Ausführungen und der mittels eines Roboters bedient werden kann, wobei der Werkzeugträger derart auszuführen ist, dass er dem bei der Herstellung eines Verbundwerkstückes infolge des Aufschäumens eines Reaktionsgemisches entstehenden Druck durch einen entsprechenden Schließdruck Stand hält und den Schließdruck nach Fertigstellung des Verbundbauteils kontrolliert reduzieren kann. Darüber hinaus ist eine Fertigungsanlage mit einem derartigen Werkzeugträger anzugeben, bei der Roboter für eine weitgehende Automatisierung einsetzbar sind.

Die Erfindung löst diese Aufgabenstellung mit den Merkmalen des unabhängigen Patentanspruchs 1.

Weitere Ausgestaltungen der Erfindung sind Gegenstand der Unteransprüche. Ein Werkzeugträger, mit einem Werkzeugträgeroberteil, in dem ein Werkzeugoberteil aufgenommen ist und mit einem lösbar mit dem Werkzeugträgeroberteil koppelbaren Werkzeugträgerunterteil, in dem ein Werkzeugunterteil aufgenommen ist, wobei das Werkzeugoberteil und das Werkzeugunterteil gemeinsam ein Fertigungswerkzeug zur Herstellung eines Verbundwerkstückes mit mindestens einer durch ein aufschäumendes Reaktionsgemisch gebildeten Schaumstoffschicht bilden und der Werkzeugträger um eine Achse schwenkbar in einem Schwenkrahmen gelagert ist und das Werkzeugträgeroberteil mindestens einen Werkzeugwechsler zur Ankopplung eines Werkzeugroboters aufweist, wurde erfindungsgemäß dahin gehend weitergebildet, dass das Werkzeugträgeroberteil und das Werkzeugträgerunterteil zum Öffnen und Schließen lediglich in vertikaler Richtung gegeneinander bewegbar sind, wozu an dem Werkzeugträger Führungssäulen und hierzu passend Führungsbuchsen vorhanden und die Führungssäulen bei zusammengesetztem Werkzeugträger in die Führungsbuchsen eingeführt sind und das Werkzeugträgerunterteil eine auf einem mit Druckluft gefüllten Luftkissen zur Erzeugung eines Schließdruckes zwischen dem Werkzeugunterteil und dem Werkzeugoberteil und zum kontrollierten Ablassen dieses Schließdrucks schwimmend gelagerte Spannplatte aus einem Leichtbauwerkstoff aufweist, wobei zur Vertikalführung der Spannplatte in dem Werkzeugträgerunterteil Vertikalführungselemente vorhanden sind.

Der Werkzeugwechsler kommt erfindungsgemäß zum Einsatz, um die eingangs bereits erwähnte, aufwändige Hydraulik, beziehungsweise elektrische- oder pneumatische Einrichtungen einzusparen. Der Werkzeugträger wird mit Hilfe des Werkzeugwechslers mit einem Roboter gekoppelt, der die Bedienung des Werkzeugträgers übernimmt. Dies bedeutet, dass der Roboter dazu geeignet ist, das Fertigungswerkzeug zu öffnen und zu schließen und darüber hinaus die Werkzeughälften zu trennen und in einer für die Herstellung der Verbundwerkstücke geeigneten Position anzuordnen. So kann beispielsweise der Roboter dazu genutzt werden, das Werkzeugträgeroberteil zusammen mit dem darin aufgenommenen Werkzeugoberteil vom Werkzeugträgerunterteil und dem Werkzeugunterteil zu trennen, um das Werkzeugträgeroberteil seitlich neben dem Werkzeugträgerunterteil abzusetzen. Diese Anordnung der Werkzeugträgerteile mit den darin aufgenommenen Werkzeugteilen ermöglicht eine ergonomisch einfache Bestückung der Werkzeugteile beziehungsweise eine verbesserte Zugänglichkeit für einen Schäumroboter. Darüber hinaus kann auch die Entnahme des fertig gestellten Verbundwerkstückes durch diese Anordnung erleichtert und verbessert werden. Natürlich wird der Roboter auch dazu genutzt, die Werkzeugteile wieder miteinander zu verbinden, so dass das Fertigungswerkzeug für die Herstellung des Verbundwerkstückes geschlossen ist.

Durch die Möglichkeit mindestens einen Werkzeugwechsler unmittelbar am Werkzeugträger zu befestigen, gelingt es erstmals, zahlreiche Baugruppen und Steuerungseinheiten eines derartigen Werkzeugträgers einzusparen, so dass dieser insgesamt einfach aufgebaut ist und ein wesentlich geringeres Gewicht aufweist, als bekannte Ausführungen. Auf diese Weise gelingt es ferner, Roboter für die Fertigung von Verbundwerkstücken einzusetzen, was deren Herstellung insgesamt verbessert und kürzere Taktzeiten ermöglicht.

Der Werkzeugträger nach der Erfindung weist jedoch noch weitere, sehr wesentliche Vorteile auf. So weist das Werkzeugträgerunterteil eine auf einem Luftkissen schwimmend gelagerte Spannplatte aus einem Leichtbauwerkstoff auf, wobei zur Vertikalführung der Spannplatte in dem Werkzeugträgerunterteil Vertikalführungselemente vorhanden sind. Die Spannplatte hat die Aufgabe, das Werkzeugunterteil aufzunehmen.

Um bei der Herstellung des Verbundwerkstückes einen Schaumaustritt aus dem Fertigungswerkzeug zu verhindern, ist die Spannplatte, die beispielsweise aus Aluminium bestehen kann, nicht fest auf das Werkzeugträgerunterteil montiert. Unter der Spannplatte befindet sich daher bevorzugt ein Luftkissen, welches mit Druckluft gefüllt. Infolge dessen wird die Spannplatte angehoben und schließt die Werkzeughälften mit einer Kraft, die beispielsweise bis zu 400 kN betragen kann. Eine weitere Aufgabe des Luftkissens ist es, am Ende des Schäumprozess den Schaumdruck kontrolliert abzulassen und somit Risse oder Lunker im Schaum zu vermeiden. Das Luftkissen wird zum Beispiel durch A-Druckschläuche nach DIN 14811 erzeugt, die an den offenen Enden mit Klemmplatten verschlossen werden. Damit die Spannplatte sich nicht seitlich verschieben kann, sind die bereits erwähnten Vertikalführungselemente in dem Werkzeugträgerunterteil vorhanden, die die Spannplatte beim Befüllen und Entleeren des Luftkissens vertikal und linear führen. Im einfachsten Fall kann es sich hierbei um Bolzen im Werkzeugunterteil handeln, die in geeignete Führungen der Spannplatte eingreifen.

In einer bevorzugten Ausführungsform weist der Werkzeugträger ein Temperiergerät auf.

Bei der Herstellung von Verbundwerkstücken ist es für die Qualitätssicherung von besonderer Bedeutung, dass die Werkzeughälften während der Dauer der Verarbeitung eine konstante Temperatur aufweisen. Schwankende Temperaturen können zu Fehlstellen in dem zu erzeugenden Verbundwerkstück führen, so dass dieses unbrauchbar wird. Bisher wurde die Temperierung der Werkzeughälften durch externe Temperiergeräte gewährleistet, die folglich ein zusätzliches Aggregat darstellten. Ein erfindungsgemäßer Werkzeugträger weist hingegen in vorteilhafter Weise ein Temperiergerät auf, das bevorzugt unmittelbar an dem Werkzeugträger befestigt ist. So besteht beispielsweise die Möglichkeit, das Temperiergerät unmittelbar in den Schwenkrahmen zu integrieren. Damit sind keine zusätzlichen Verbindungsleitungen und entfernt vom Werkzeugträger angeordnete Aggregate mehr erforderlich, so dass der Werkzeugträger insgesamt sehr kompakt ausgeführt ist. Das Temperiergerät heizt die Werkzeughälften auf, wobei die zu erreichende Temperatur beispielsweise 45°C beträgt. Dabei sind maximal zulässige Toleranzen von lediglich +/- 2 K zulässig. Dies erklärt auch die Bedeutung eines Temperiergerätes unmittelbar am Werkzeugträger, weil dadurch Wärmeverluste vermieden werden.

Eine erste Ausgestaltung der Erfindung ist darin zu sehen, dass sowohl das Werkzeugträgeroberteil, als auch das Werkzeugträgerunterteil um je eine Achse schwenkbar in dem Werkzeugträger gelagert sind. Diese schwenkbare Anordnung ermöglicht nach dem bereits erwähnten Absetzen des Werkzeugträgeroberteils mit dem darin aufgenommenen Werkzeugoberteil seitlich neben dem Werkzeugträgerunterteil mit dem darin vorhandenen Werkzeugunterteil eine verschwenkte und damit in verbesserter Weise zugängliche Anordnung des Werkzeugunterteils beziehungsweise des Werkzeugoberteils. Für eine in diesem Bereich tätige Person werden dadurch körperlich anstrengende Tätigkeiten vermieden beziehungsweise wesentlich reduziert. Die Bestückung der beiden Hälften des Fertigungswerkzeugs ist in einfacher Weise möglich. Das Werkzeugunterteil kann dabei beispielsweise um 45° zur Bedienperson geschwenkt werden. Darüber hinaus kann auch das Werkzeugoberteil verschwenkt werden, was beispielsweise im Bereich eines Winkels zwischen 0° bis 90° möglich ist.

Die mit dem erfindungsgemäßen Werkzeugträger angestrebte Automatisierung und damit die Vereinfachung der Herstellungsprozesse der zu erzeugenden Verbundwerkstücke lässt sich weiter verbessern, wenn an dem Werkzeugträgeroberteil wenigstens eine Energieschnittstelle und an dem Werkzeugträgerunterteil mindestens eine mit dieser kuppelbare Energieschnittstelle vorhanden ist und/oder der Werkzeugwechsler wenigstens eine mit einer korrespondierenden Energieschnittstelle des Werkzeugroboters kuppelbare Energieschnittstelle und/oder der Werkzeugträger eine Energieschnittstelle zur Kupplung des Werkzeugträgers mit einer Energieschnittstelle eines Werkzeugmagazins aufweist.
Als Energieschnittstellen sind dabei Verbindungen oder Kupplungen zu verstehen, die beispielsweise die Übertragung elektrischer Energie ermöglichen, wobei die Energieschnittstellen in diesem Sinne auch für das zur Verfügung stellen einer für die Steuerung des Fertigungswerkzeugs erforderlichen Pneumatik, also beispielsweise eines Vakuums, oder einer benötigten Hydraulik nutzbar sind.

Werden die Energieschnittstellen zudem als Dockingeinrichtungen ausgebildet, was einer weiterführenden, sehr vorteilhaften Lösung der Erfindung entspricht, so lässt sich ohne manuellen Aufwand, also automatisch und auf einfache Weise beim Zusammensetzen der Werkzeughälften beziehungsweise der Werkzeugträgerhälften eine Kopplung der für die Steuerung des Fertigungswerkzeugs erforderlichen Energieformen herstellen.

Neben den bereits erwähnten Möglichkeiten für die Übertragung einzelner Energien kann jede der vorhandenen Energieschnittstellen zudem wenigstens eine Vakuumschnittstelle und/oder mindestens eine Datenschnittstelle aufweisen.

Während der chemischen Reaktion des aufschäumenden Reaktionsgemisches muss eine sehr hohe Haltekraft realisiert werden, die bei einigen Ausführungen derartiger Werkzeugträger beispielsweise 400 kN betragen kann. Daher geht eine spezielle Ausgestaltung der vorliegenden Erfindung darüber hinaus dahin, dass zum Schließen des Werkzeugträgers Verriegelungsbuchsen vorhanden sind, in die bei geschlossenem Werkzeugträger Verriegelungsbolzen eingeführt sind. Diese Ausführung bietet die Möglichkeit höhere Haltekräfte zu erzeugen und stellt eine wesentliche Vereinfachung der Verriegelung dar, da bislang hierfür sehr aufwändige Mechaniken zum Einsatz kamen. Der Vorschlag ermöglicht auch eine vollständige Automatisierung des Öffnens und Schließens des Werkzeugträgers beziehungsweise des Fertigungswerkzeugs.

Für die Herstellung der eingangs beschriebenen Verbundwerkstücke ist es von besonderer Bedeutung, dass die Werkzeughälften des Fertigungswerkzeugs sehr genau zueinander passend angeordnet sind, wenn das Fertigungswerkzeug geschlossen ist. Jede Abweichung kann zu Fehlern am Endprodukt führen, was unbedingt vermieden werden muss. Aus diesem Grund sind an dem Werkzeugträger Führungssäulen und hierzu passend Führungsbuchsen vorhanden, wobei die Führungssäulen bei zusammengesetztem Werkzeugträger in die Führungsbuchsen eingeführt sind. Die Führungssäulen geben nach dem Einführen in die Führungsbuchsen eine optimale Führung im Sinne einer Gleitführung und orientieren auf diese Weise die Werkzeughälften aufeinander zu, ohne dass es einer Korrektur dieses Bewegungsablaufes bedarf.

Eine weitere, sehr vorteilhafte Maßnahme zur Verbesserung des erfindungsgemäßen Werkzeugträgers besteht darin, dass dieser einen Zentralanschluss mit mehreren Druckluftanschlüssen und/oder Vakuumanschlüssen und/oder Elektroenergieanschlüssen und/oder Pneumatikkupplungen und/oder Anschlüssen für die Temperierung des Fertigungswerkzeuges aufweist. Bevorzugt wird dieser Zentralanschluss an einer leicht zugänglichen Außenseite des Werkzeugträgers befestigt, so dass Verbindungen zu einzelnen Anschlüssen des Zentralanschluss, also beispielsweise Schläuche oder Kabel, problemlos hergestellt werden können. Auf diese Weise entfällt die zum Teil komplizierte Verbindungstechnik mit unterschiedlichen Adaptern und Anschlüssen, wie dies bislang der Fall war. Bei dem erfindungsgemäßen Werkzeugträger sind demnach möglichst sämtliche, für die Steuerung des Werkzeugträgers erforderliche Anschlüsse in dem Zentralanschluss vereint.

Eine weitere, sehr wesentliche Maßnahme zur Verbesserung eines erfindungsgemäßen Werkzeugträgers besteht ferner darin, dass der Werkzeugträger insgesamt als Leichtbauausführung gestaltet und hierfür als Fachwerkkonstruktion ausgeführt ist. Diese Fachwerkkonstruktion bringt den Umstand mit sich, dass der Werkzeugträger zahlreiche Materialausnehmungen aufweist. Durch das infolge dieser Konstruktion eingesparte Gewicht wird zusätzlich die Handhabbarkeit mittels eines Werkzeugroboters verbessert. Wie zuvor bereits ausgeführt wurde, werden möglichst viele Elemente des Werkzeugträgers fachwerkartig ausgeführt, um einerseits die erforderliche Stabilität zu gewährleisten und andererseits durch die damit vorhandenen Ausnehmungen Material und Gewicht zu sparen. Demzufolge geht ein weiterführender Vorschlag der Erfindung dahin, dass der ebenfalls fachwerkartig gestaltete Schwenkrahmen einen zur Umsetzung des Schwenkvorganges ansteuerbaren, ein Getriebe aufweisenden Antrieb und/oder ein Temperiergerät aufnimmt. Auf das Temperiergerät wurde zuvor bereits eingegangen. Neu ist an diesem Vorschlag, dass auch weitere Aggregate, wie beispielsweise der erwähnte Antrieb und/oder ein Getriebe in die Ausnehmungen der Fachwerkkonstruktion eingesetzt werden können. Dies bedeutet einen weiteren Schritt in Richtung kompakter Ausführung des erfindungsgemäßen Werkzeugträgers. Der Antrieb und das Getriebe sind erforderlich, um den Werkzeugträger um eine Achse zu verschwenken. Die Verschwenkung es gesamten Werkzeugträgers ist beispielsweise sinnvoll, um diesen bei eingebrachtem Reaktionsgemisch in eine so genannte "Schäumlage" zu verbringen. In dieser Position wird der Werkzeugträger so lange gehalten, bis das Reaktionsgemisch einen Schaumstoff gebildet hat und ausgehärtet ist.

Gemäß einer speziellen Variante wird zur Umsetzung der Antriebs- und Getriebefunktion ein Servogetriebemotor verwendet, der als kompakte Baueinheit einen Beitrag zur Lösung der Aufgabenstellung einer Verbesserung des erfindungsgemäßen Werkzeugträgers leistet.

Eine besonders einfache und stabile Lagerung des Schwenkrahmens kann dadurch erreicht werden, dass dieser zur schwenkbaren Lagerung des Werkzeugträgers koaxial zueinander angeordnete Gleitlagerbuchsen aufweist. Gleitlagerbuchsen sind langlebig, robust und wartungsarm, was für eine kontinuierliche, also unterbrechungsfreie Produktion der Verbundwerkstücke von entscheidendem Vorteil ist.

Neben dem zuvor bereits beschriebenen Zentralanschluss kann zur Erleichterung der Zugänglichkeit an wenigstens einer geeigneten, frei zugänglichen Außenoberfläche des Schwenkrahmens mindestens ein Pneumatik- oder Hydraulikverteiler mit mehreren Anschlüssen angeordnet werden.

Eine Fertigungsanlage der hier betroffenen Art weist einen Werkzeugträger auf, wie er zuvor beschriebenen wurde und umfasst darüber hinaus:
- einen Werkzeugroboter zur Handhabung des Werkzeugträgeroberteils,
- einen Schäumroboter zum Eintrag eines zum Aufschäumen geeigneten Reaktionsgemischs in das geöffnete Werkzeugunterteil oder in das geschlossene Fertigungswerkzeug und
- eine Computersteuerung.
Erfindungsgemäß ist das Werkzeugoberteil dabei schwenkbar mit dem Werkzeugträgeroberteil und/oder das Werkzeugunterteil schwenkbar mit dem Werkzeugträgerunterteil in dem Werkzeugträger aufgenommen, sodass eine für die Bestückung optimale Position des Werkzeugoberteils und/oder des Werkzeugunterteils eingestellt werden kann.

Diese Maßnahme erleichtert die Bedienbarkeit durch eine an dem Werkzeugträger tätige Person oder durch einen Roboter. Das Werkzeugunterteil kann dabei beispielsweise um 45° zur Bedienperson geschwenkt werden. Darüber hinaus kann auch das Werkzeugoberteil verschwenkt werden, was beispielsweise im Bereich eines Winkels zwischen 0° bis 90° möglich ist.

Eine erste Ausgestaltung der erfindungsgemäßen Fertigungsanlage ist darin zu sehen, dass das Werkzeugoberteil und/oder das Werkzeugunterteil stufenlos schwenkbar ist beziehungsweise diese stufenlos schwenkbar sind. Durch die stufenlose Verstellbarkeit sind das Werkzeugoberteil und/oder das Werkzeugunterteil flexibel einsetzbar und für die Herstellung unterschiedlicher Verbundwerkstücke geeignet, die ihrerseits jeweils verschiedene Schwenkpositionen erfordern. Durch diese Maßnahme wird folglich auch die Flexibilität des erfindungsgemäßen Werkzeugträgers im Rahmen einer Fertigungsanlage verbessert.

Ein weiterer, sehr wesentlicher Vorteil der Fertigungsanlage ist darin zu sehen, dass diese modular zusammengesetzt oder aufgebaut ist. Durch den modularen Aufbau kann die Fertigungsanlage in beliebiger Weise durch Komponenten erweitert werden beziehungsweise können einzelne Komponenten entfernt werden. Auf diese Weise wird eine flexibel an wechselnde Produktionsbedingungen anpassbare Fertigungsanlage geschaffen.

Von besonderem Vorteil ist es darüber hinaus, wenn die Fertigungsanlage ein Werkzeugmagazin zur Aufnahme des Werkzeugträgers mit dem Fertigungswerkzeug aufweist und das Werkzeugmagazin über wenigstens eine Energieschnittstelle zur Verbindung mit mindestens einer Energieschnittstelle des Werkzeugträgers oder des Fertigungswerkzeugs verfügt, sodass beim Absetzen des Werkzeugträgers in dem Werkzeugmagazin eine aktive Verbindung gegeben ist. Anders ausgedrückt bleiben die Funktionen innerhalb des Fertigungswerkzeugs auch dann erhalten, wenn dieses in dem Werkzeugmagazin abgelegt wird, um beispielsweise die Zeiten zur Aushärtung beziehungsweise zur Reaktion des aufschäumenden Reaktionsgemisches zur Herstellung weiterer Verbundwerkstücke in der Fertigungsanlage zu nutzen.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Teil einer Seite eines Werkzeugträgers in perspektivischer Ansicht,
- Figur 2:: eine Seitenansicht des Werkzeugträgers aus Figur 1 mit einem darin eingesetzten Fertigungswerkzeug,
- Figur 3:: die der in Figur 1 gezeigten Seite des Werkzeugträgers gegenüberliegende Seite,
- Figur 4:: eine Ansicht von oben auf einen Werkzeugträger, jedoch ohne Fertigungswerkzeug,
- Figur 5:: einen Werkzeugwechsler mit einer Energieschnittstelle,
- Figur 6:: ausschnittsweise ein Werkzeugoberteil und ein Werkzeugunterteil während des Schließvorganges des Fertigungswerkzeugs
- und Figur 7:: ausschnittsweise einen Blick auf einen Zentralanschluss des Werkzeugträgers.

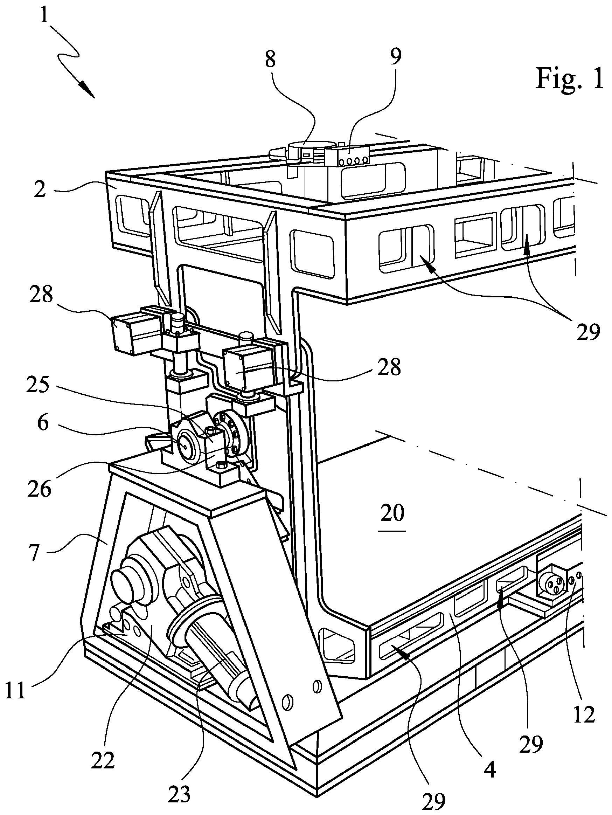

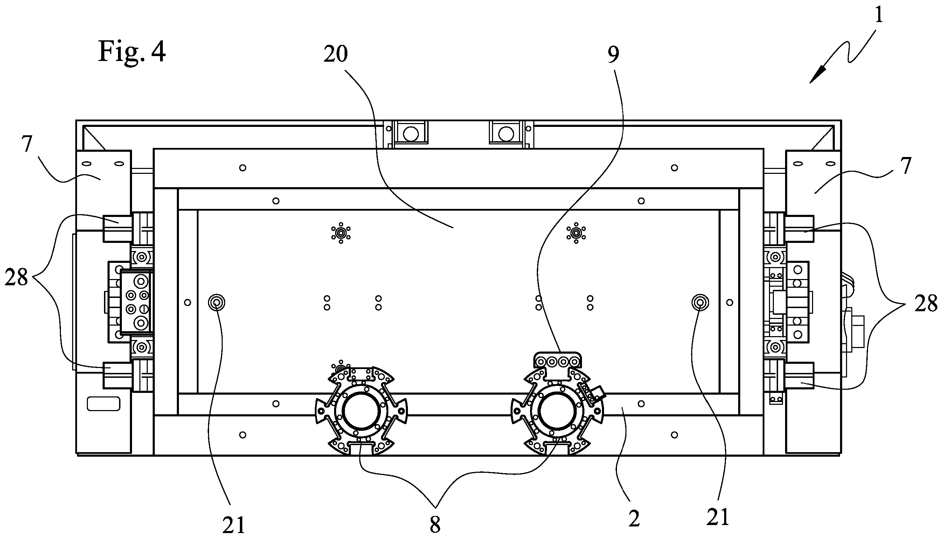

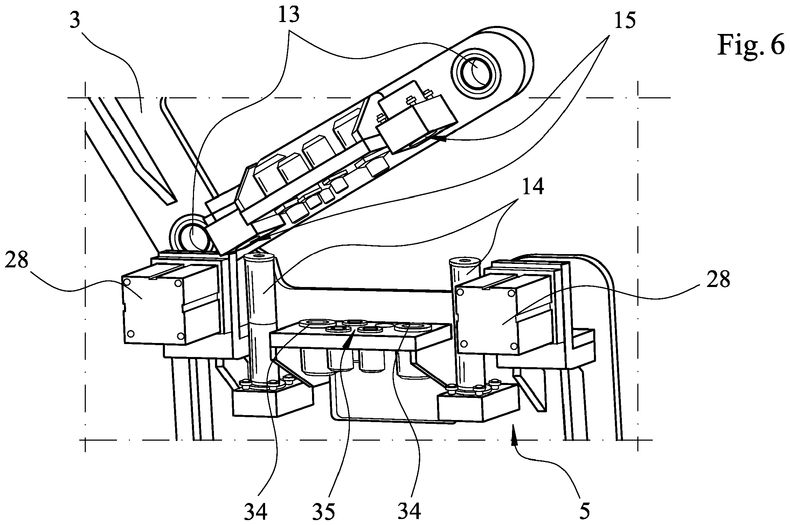

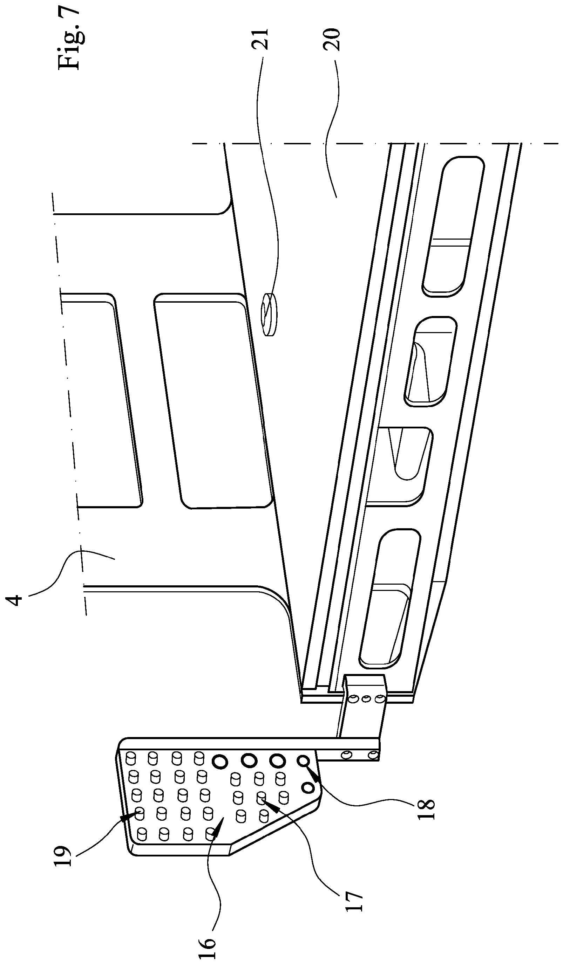

Die Figur 1 stellt einen Teil einer Seite eines Werkzeugträgers 1 dar, der zweiteilig ausgeführt ist und demzufolge ein Werkzeugträgeroberteil 2 sowie ein mit dem Werkzeugträgeroberteil 2 lösbar verbundenes Werkzeugträgerunterteil 4 aufweist. Das Werkzeugträgeroberteil 2 dient der Aufnahme eines Werkzeugoberteils 3, wobei das Werkzeugträgerunterteil 4 ein Werkzeugunterteil 5 aufnimmt. In der Figur 1 sind das Werkzeugoberteil 3 und das Werkzeugunterteil 3 aus Vereinfachungsgründen jedoch nicht gezeigt. An der oberen, freien Außenoberfläche des Werkzeugträgeroberteils 2 ist als Besonderheit dieser Ausführung ein Werkzeugwechsler 8 vorhanden, der zudem mit einer Energieschnittstelle 9 ausgestattet ist, die in diesem Fall der Übertragung elektrischer Signale sowie zur Bereitstellung pneumatischer Energie dient. Ganz allgemein ist festzuhalten, dass die Energieschnittstellen 9-12 bei einem Transport des Werkzeugträgeroberteils 2 durch einen Werkzeugroboter beispielsweise ein Vakuum zur Verfügung stellen, das für die Herstellung eines Verbundwerkstückes mit einer Schaumstoffschicht erforderlich ist. Ebenso muss eine Signalübertragung stattfinden, welche beispielsweise die Informationsübermittlung zwischen dem Werkzeugträgeroberteil 2 und zugehörigen Vakuum- beziehungsweise Druckluftventilen sicherstellt.
Der erwähnte Werkzeugwechsler 8 ist mit einem an einem Roboterarm eines Werkzeugroboters angeordneten Werkzeugwechsler kuppelbar, so dass der gesamte Werkzeugträger 1 mit einem darin aufgenommenen Fertigungswerkzeug oder nur das Werkzeugträgeroberteil 2 mit einem darin angeordneten Werkzeugoberteil 3 mit Hilfe des Werkzeugroboters aufgenommen und transportiert werden kann. Bevorzugt wird der Werkzeugroboter auch dazu eingesetzt, die Werkzeugträgerhälften 2, 4 voneinander zu trennen beziehungsweise diese miteinander zu verbinden. Dieser Vorgang ermöglicht die Bestückung einer in dem Fertigungswerkzeug vorhandenen Kavität mit Bauteilen, wie der eingangs erwähnten Formhaut oder einem Träger und/oder mit einem Reaktionsgemisch, das zum Aufschäumen geeignet ist. Das Werkzeugträgeroberteil 2 kann zusammen mit einem in diesem aufgenommenen Werkzeugoberteil 3 von dem Werkzeugträger 1 getrennt und abgehoben werden. Im Anschluss daran besteht die Möglichkeit, das Werkzeugträgeroberteil 2 beispielsweise seitlich neben dem Werkzeugträgerunterteil 4 abzustellen, um die Werkzeugteile 3, 5 mit einem Bauteil zu bestücken. Das Werkzeugträgeroberteil 2 ist bei geschlossenem Werkzeugträger 1 über Verriegelungseinrichtungen 28 an dem Werkzeugträgerunterteil 4 fixiert. Die Verriegelungseinrichtungen 28 verfügen dabei über Verriegelungsbolzen, die in korrespondierende Verriegelungsbuchsen 13 eingreifen, was deutlicher aus der Darstellung in Figur 6 hervorgeht. Diese lösbare Verbindung wird so lange gehalten, wie der Werkzeugträger 1 geschlossen bleiben muss, um in dem Fertigungswerkzeug ein Verbundwerkstück herzustellen.
Eine weitere Besonderheit des in Figur 1 gezeigten Werkzeugträgers 1 besteht ferner darin, dass dieser schwenkbar in einem Schwenkrahmen 7 gelagert ist, so dass er erforderlichenfalls eine Rotationsbewegung um die Achse 6 vollziehen kann. Die Achse 6 ist hierfür in zwei Gleitlagerbuchsen 25 und 26 gelagert. Eine derartige Schwenkbewegung wird beispielsweise bei der Herstellung eines Verbundwerkstückes mit einer durch ein aufschäumendes Reaktionsgemisch gebildeten Schaumstoffschicht notwendig, weil dadurch eine optimale Verteilung des sich bildenden Schaumstoffes innerhalb des Verbundwerkstückes erreicht werden kann. Folglich wird nach dem Einbringen des Reaktionsgemisches in das Werkzeugunterteil 5 und dem Verschließen des Fertigungswerkzeugs durch Aufsetzen des Werkzeugoberteils 3 der gesamte Werkzeugträger 1 um die Achse 6 verschwenkt und zeitlich begrenzt in dieser Position fixiert. Für die Umsetzung der Verschwenkung des Werkzeugträgers 1 mit dem darin aufgenommenen Fertigungswerkzeug sorgt ein Antrieb 23, bei dem es sich im vorliegenden Beispiel um einen Servogetriebemotor handelt, der folglich auch ein Getriebe 22 zur Anpassung der Drehbewegung aufweist. Bei Betrachtung des Werkzeugträgers 1 fällt ferner auf, dass dieser fachwerkartig ausgeführt ist und daher zahlreiche Ausnehmungen 29 aufweist, die eine erhebliche Gewichteinsparung mit sich bringen. Dies führt überhaupt erst dazu, dass der Werkzeugträger 1 mittels eines Werkzeugroboters transportiert werden kann. Die das Werkzeugunterteil 5 aufnehmende Seite des Werkzeugträgerunterteils 4 wird darüber hinaus durch eine Spannplatte 20 gebildet, auf deren Einzelheiten im Zusammenhang mit der Beschreibung der Figuren 4 und 7 noch näher eingegangen wird. Der Werkzeugträger 1 verfügt auch über Energieschnittstellen 11 und 12, die seine Lagerung in einem Werkzeugmagazin gestatten. Über diese Energieschnittstellen 11, 12 wird der Werkzeugträger 1 in dem Werkzeugmagazin in der zuvor beschriebenen Weise weiterhin mit Energie versorgt, die beispielsweise auch eine thermische Energie sein kann, um das Fertigungswerkzeug auf einem definierten Temperaturniveau zu halten, während der Schaumstoff des Verbundwerkstückes aushärtet. Die erwähnten Energieschnittstellen 9-12 werden jeweils als Dockingstationen ausgeführt, sodass ihr Zusammenfügen und eine Trennung problemlos und ohne manuelle Tätigkeiten möglich sind.

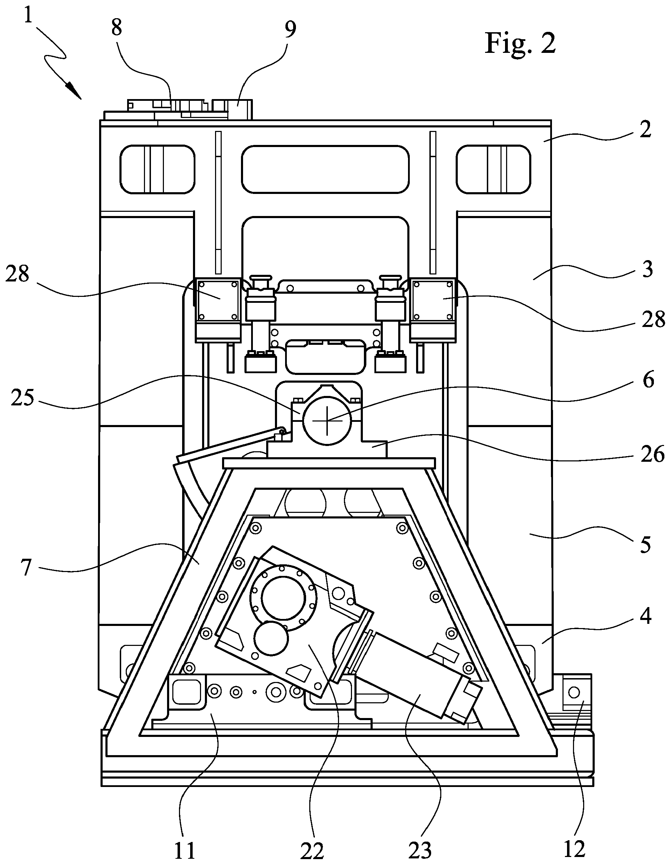

Aus der Figur 2 geht eine Seitenansicht des Werkzeugträgers 1 aus Figur 1 mit einem darin eingesetzten Fertigungswerkzeug hervor, das aus einem Werkzeugoberteil 3 und einem mit diesem verbundenen Werkzeugunterteil 5 besteht. Das Werkzeugoberteil 3 ist in dem Werkzeugträgeroberteil 2 und das Werkzeugunterteil 5 ist in dem Werkzeugträgerunterteil 4 aufgenommen. Durch die Verriegelungseinrichtungen 28 wird das Werkzeugträgeroberteil 2 an dem Werkzeugträgerunterteil 4 fixiert, so dass dadurch der Werkzeugträger 1 und mit diesem das Fertigungswerkzeug geschlossen ist. Die Seitenansicht in Figur 2 zeigt noch einmal deutlich die Achse 6, um die das gesamte Fertigungswerkzeug einschließlich des Werkzeugträgers 1 verschwenkt werden kann. Die Achse 6 ist in den Gleitlagerbuchsen 25, 26 gelagert, die über eine Verschraubung miteinander verbunden sind. Da auch der Schwenkrahmen 7 fachwerkartig ausgeführt ist und dadurch einen Hohlraum aufweist, besteht die vorliegend genutzte Möglichkeit, in dem Hohlraum einen Antrieb 23 mit einem Getriebe 22 einzusetzen, was einer Platz sparenden und kompakten Bauweise entspricht. Unterhalb des Antriebs 23 befindet sich ferner eine Energieschnittstelle 11 zur Verbindung des Werkzeugträgers 1 mit einer korrespondierenden Energieschnittstelle eines Werkzeugmagazins. Eine weitere, hierfür geeignete Energieschnittstelle bildet die seitlich des Werkzeugträgers 1 vorhandene Energieschnittstelle 12.

Auf der freien, die Oberseite des Werkzeugträgeroberteils 2 bildenden Außenoberfläche ist darüber hinaus der zuvor bereits beschriebene Werkzeugwechsler 8 mit einer Energieschnittstelle 9 angeordnet. Der Werkzeugwechsler 8 dient der Verbindung mit einem korrespondierenden Werkzeugwechsler an einem Roboterarm eines Werkzeugroboters.

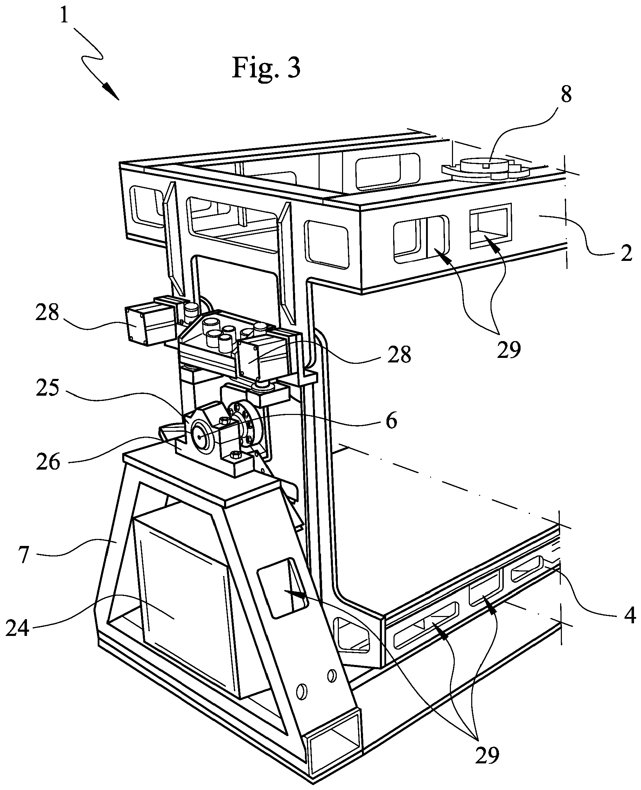

Die Figur 3 zeigt den Werkzeugträger 1 aus den Figuren 1 und 2 in einer Ansicht von der dem Antrieb 23 gegenüberliegenden Seite. Auch hierbei dient der Schwenkrahmen 7, der im Zuge einer Leichtbauausführung ebenfalls über Ausnehmungen 29 verfügt, der Lagerung des Werkzeugträgers 1 und dessen Verschwenkung um die Achse 6. Der auf der Oberseite des Werkzeugträgeroberteils 2 angeordnete Werkzeugwechsler 8 weist hierbei keine Energieschnittstelle auf. Eine aus der Figur 3 erkennbare Besonderheit besteht darin, dass in den Freiraum des Schwenkrahmens 7 ein Temperiergerät 24 eingesetzt ist, das für die Einhaltung der Produktionstemperatur zur Herstellung eines eine Schaumstoffschicht aufweisenden Verbundwerkstückes von Bedeutung ist.

Aus der Figur 4 geht eine Ansicht von oben auf den Werkzeugträger 1, jedoch ohne Fertigungswerkzeug hervor. Dadurch wird die in dem Werkzeugträgerunterteil 4 gelagerte Spannplatte 20 sichtbar, auf der normalerweise das Werkzeugunterteil 5 fixiert wird. Die Spannplatte 20 ist in vertikaler Richtung bewegbar, so dass durch diese Bewegung der sich ausbreitende Druck eines aufschäumenden Reaktionsgemisches des herzustellenden Verbundwerkstückes ausgeglichen werden kann. Hierzu ist die Spannplatte 20 schwimmend gelagert, was bedeutet, dass unterhalb der Spannplatte 20 ein Luftpolster geschaffen wird. Um zu vermeiden, dass sich die Spannplatte 20 seitwärts bewegt verfügt sie bei dem in Figur 4 dargestellten Beispiel über zwei Vertikalführungselemente 21, bei denen es sich um Stifte in dem Werkzeugträgerunterteil 4 handelt, die in korrespondierende Bohrungen der Spannplatte 20 eingreifen. Damit ist eine sehr einfache Möglichkeit einer Vertikalführung der Spannplatte 20 geschaffen. Aus der Darstellung in Figur 4 geht auch hervor, dass auf der freien, oberen Außenoberfläche des Werkzeugträgeroberteils 2 benachbart und mit einem Abstand zueinander zwei Werkzeugwechsler 8 vorhanden sind, von denen der im Bild rechts gezeigte Werkzeugwechsler 8 zusätzlich eine Energieschnittstelle 9 aufweist. Darüber hinaus geht aus der Figur 4 hervor, dass der Werkzeugträger 1 beidseitig über Verriegelungseinrichtungen 28 verfügt.

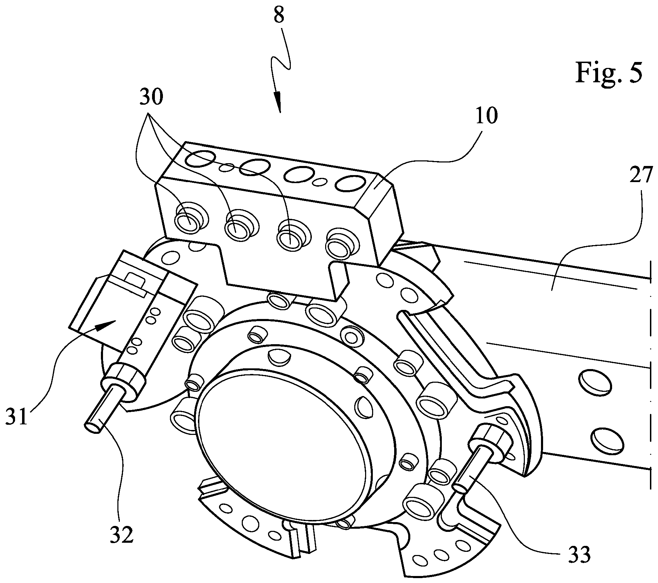

Im Zusammenhang mit der Figur 5 wird ein Werkzeugwechsler 8 mit einer Energieschnittstelle 10 beschrieben, der das Anschlussstück eines Werkzeugroboters darstellt. Mit anderen Worten handelt es sich hierbei um eines der beiden Gegenstücke zu den Werkzeugwechslern 8, die an der Außenoberfläche des Werkzeugträgeroberteils 2 angeordnet sind. Der in Figur 5 gezeigte Werkzeugwechsler 8 ist mit seiner Rückseite an einem Verbindungselement 27 befestigt, bei dem es sich vorliegend um einen Tragbalken als Bestandteil einer Tragkonstruktion handelt, der an seiner nicht dargestellten Seite einen zweiten Werkzeugwechsler aufweist. Diese Tragkonstruktion wird insgesamt an dem Werkzeugroboter fixiert und zur Aufnahme des Werkzeugoberteils 2 beziehungsweise des Werkzeugträgers 1 mit den beiden korrespondierenden Werkzeugwechslern 8 an der freien Außenoberfläche des Werkzeugträgeroberteils 2 angesetzt. Der hier gezeigte Werkzeugwechsler 8 verfügt über die Energieschnittstelle 10, die im vorliegenden Fall mehrere Vakuumsverbindungen 30 aufweist. Darüber hinaus ist an dem Werkzeugwechsler 8 einen Adapter 31 mit einer Datenbusverbindung 32 angeordnet, der für die Übertragung elektrischer beziehungsweise elektronischer Signale geeignet ist. Mit diesem Adapter 31 kann folglich die Steuerung des Werkzeugträgers 1 beziehungsweise des darin aufgenommenen Fertigungswerkzeuges realisiert werden. Der Werkzeugwechsler 8 in Figur 5 verfügt ferner über mindestens ein Justierelement 33, das im vorliegenden Beispiel als ein Stift ausgeführt ist, der in eine korrespondierende Ausnehmung des Werkzeugwechslers 8 am Werkzeugträgeroberteil 2 eingreift, wenn die Verbindung zwischen den Werkzeugwechslern 8 hergestellt werden soll.

In der Figur 6 ist ausschnittsweise ein Werkzeugoberteil 3 und ein Werkzeugunterteil 5 während des Schließvorganges des Fertigungswerkzeugs gezeigt. Von Bedeutung ist hierbei, dass an dem Werkzeugunterteil 5 zwei Führungssäulen 14 vorhanden sind, die für eine optimale Führung beim Schließen und Öffnen der Werkzughälften 3, 5 sorgen. Hierfür greifen die Führungssäulen 14 beim Schließen des aus dem Werkzeugunterteil 5 und dem Werkzeugoberteil 3 bestehenden Fertigungswerkzeuges in korrespondierende Führungsbuchsen 15 ein. Dadurch werden unerwünschte Seitwärtsbewegungen der Werkzeughälften relativ zueinander vermieden.
An dem Werkzeugoberteil 3 und an dem Werkzeugunterteil 4 sind darüber hinaus zueinander korrespondierende Energieschnittstellen vorhanden, wobei diese beim Schließen des Fertigungswerkzeuges unmittelbar ineinander greifen und eine Verbindung herstellen. Hierbei sind die Energieschnittstellen in Form einer Dockingstation ausgeführt und weisen zwei Vakuumanschlüsse 34 sowie drei Druckluftanschlüsse 35 auf. An dem Werkzeugoberteil 3 sind die Druckluftanschlüsse 35 sowie die Vakuumsanschlüsse 34 als Stecker und in dem Werkzeugunterteil 5 als hierzu passende Buchen ausgeführt, die nach dem Zusammenführen zudem eine Dichtungsfunktion aufweisen.
Eine weitere Besonderheit der Darstellung in Figur 6 besteht darin, dass in dem Oberwerkzeug 3 mindestens zwei Verriegelungsbuchsen 13 eingebracht sind, die bei geschlossenem Fertigungswerkzeug von korrespondierenden Verriegelungsbolzen der Verriegelungseinrichtungen 28 durchgriffen werden. Mit den Verriegelungseinrichtungen 28 kann folglich die für das Schließen des Fertigungswerkzeuges erforderliche Kraft aufgebracht werden.

Schließlich zeigt die Darstellung in Figur 7 ausschnittsweise einen Teil des Werkzeugträgerunterteils 4 mit einem Teil der darin angeordneten und schwimmend gelagerten Spannplatte 20 zur Befestigung des Werkzeugunterteils 5. Zur Vertikalführung der Spannplatte in dem Werkzeugträgerunterteil 4 weist die Spannplatte 20 eine Bohrung auf, die von dem Vertikalführungselement 21, also einem Bolzen, durchgriffen wird. Ein kleiner Teil des Bolzens ragt bei dem Beispiel in Figur 7 aus der Spannplatte 20 heraus.

Eine Besonderheit der hier dargestellten Lösung besteht darüber hinaus darin, dass an dem Werkzeugträgerunterteil 4 ein Zentralanschluss 16 angeordnet ist, der eine Vielzahl unterschiedlicher Anschlüsse aufweist. Hier sind lediglich andeutungsweise mehrere Druckluftanschlüsse 17, Vakuumanschlüsse 18 und Elektroenergieanschlüsse 19 vorhanden.

### BEZUGSZEICHENLISTE

1 Werkzeugträger
2 Werkzeugträgeroberteil
3 Werkzeugoberteil
4 Werkzeugträgerunterteil
5 Werkzeugunterteil
6 Achse
7 Schwenkrahmen
8 Werkzeugwechsler
9 Energieschnittstelle
10 Energieschnittstelle
11 Energieschnittstelle
12 Energieschnittstelle
13 Verriegelungsbuchse
14 Führungssäule
15 Führungsbuchsen
16 Zentralanschluss
17 Druckluftanschlüsse
18 Vakuumanschlüsse
19 Elektroenergieanschlüsse
20 Spannplatte
21 Vertikalführungselement
22 Getriebe
23 Antrieb
24 Temperiergerät
25 Gleitlagerbuchse
26 Gleitlagerbuchse
27 Verbindungselement
28 Verriegelungseinrichtung
29 Ausnehmung

### FORTSETZUNG BEZUGSZEICHENLISTE:

- 30: Vakuumverbindungen
- 31: Adapter
- 32: Datenbusverbindung
- 33: Justierelement
- 34: Vakuumsanschluss
- 35: Druckluftanschluss

## Patentansprüche

1. Werkzeugträger (1),
mit einem Werkzeugträgeroberteil (2), in dem ein Werkzeugoberteil (3) aufgenommen ist
und mit einem lösbar mit dem Werkzeugträgeroberteil (2) koppelbaren Werkzeugträgerunterteil (4), in dem ein Werkzeugunterteil (5) aufgenommen ist,
wobei das Werkzeugoberteil (3) und das Werkzeugunterteil (5) gemeinsam ein Fertigungswerkzeug zur Herstellung eines Verbundwerkstückes mit mindestens einer durch ein aufschäumendes Reaktionsgemisch gebildeten Schaumstoffschicht bilden
und der Werkzeugträger (1) um eine Achse (6) schwenkbar in einem Schwenkrahmen (7) gelagert ist,
**dadurch gekennzeichnet, dass**
das Werkzeugträgeroberteil (2) mindestens einen Werkzeugwechsler (8) zur Ankopplung eines Werkzeugroboters aufweist,
das Werkzeugträgeroberteil (2) und das Werkzeugträgerunterteil (4) zum Öffnen und Schließen lediglich in vertikaler Richtung gegeneinander bewegbar sind, wozu an dem Werkzeugträger (1) Führungssäulen (14) und hierzu passend Führungsbuchsen (15) vorhanden und die Führungssäulen (14) bei zusammengesetztem Werkzeugträger (1) in die Führungsbuchsen (15) eingeführt sind und das Werkzeugträgerunterteil (4) eine auf einem mit Druckluft gefüllten Luftkissen zur Erzeugung eines Schließdruckes zwischen dem Werkzeugunterteil (5) und dem Werkzeugoberteil (3) und zum kontrollierten Ablassen dieses Schließdrucks schwimmend gelagerte Spannplatte (20) aus einem Leichtbauwerkstoff aufweist,
wobei zur Vertikalführung der Spannplatte (20) in dem Werkzeugträgerunterteil (4) Vertikalführungselemente (21) vorhanden sind.

2. Werkzeugträger (1) nach Anspruch 1,
**dadurch gekennzeichnet, dass**
der Werkzeugträger (1) ein Temperiergerät aufweist.

3. Werkzeugträger nach Anspruch 1 oder 2,
**dadurch gekennzeichnet, dass**
das Werkzeugträgeroberteil (2), als auch das Werkzeugträgerunterteil (4) um je eine Achse schwenkbar in dem Werkzeugträger (1) gelagert sind.

4. Werkzeugträger nach einem der vorstehend genannten Ansprüche,
**dadurch gekennzeichnet, dass**
an dem Werkzeugträgeroberteil (2) wenigstens eine Energieschnittstelle und an dem Werkzeugträgerunterteil (4) mindestens eine mit dieser kuppelbare Energieschnittstelle vorhanden ist und/oder der Werkzeugwechsler (8) wenigstens eine mit einer korrespondierenden Energieschnittstelle (10) des Werkzeugroboters kuppelbare Energieschnittstelle (9) und/oder der Werkzeugträger (1) eine Energieschnittstelle (11, 12) zur Kupplung des Werkzeugträgers (1) mit einer Energieschnittstelle eines Werkzeugmagazins aufweist.

5. Werkzeugträger nach Anspruch 4,
**dadurch gekennzeichnet, dass**
die Energieschnittstellen (9-12) als Dockingeinrichtungen ausgebildet sind.

6. Werkzeugträger nach Anspruch 4 oder 5,
**dadurch gekennzeichnet, dass**
die Energieschnittstellen (9-12) wenigstens eine Vakuumschnittstelle und/oder mindestens eine Datenschnittstelle aufweisen.

7. Werkzeugträger nach einem der vorstehend genannten Ansprüche,
**dadurch gekennzeichnet, dass**
zum Schließen des Werkzeugträgers (1) Verriegelungsbuchsen (13) vorhanden sind, in die bei geschlossenem Werkzeugträger (1) Verriegelungsbolzen eingeführt sind.

8. Werkzeugträger nach einem der vorstehend genannten Ansprüche,
**dadurch gekennzeichnet, dass**
an dem Werkzeugträger (1) ein Zentralanschluss (16) mit mehreren Druckluftanschlüssen (17) und/oder Vakuumanschlüssen (18) und/oder Elektroenergieanschlüssen (9) und/oder Pneumatikkupplungen und/oder Anschlüssen für die Temperierung des Fertigungswerkzeuges vorhanden ist.

9. Werkzeugträger nach einem der vorstehend genannten Ansprüche,
**dadurch gekennzeichnet, dass**
der Werkzeugträger (1) insgesamt als Leichtbauausführung gestaltet, hierfür als Fachwerkkonstruktion ausgeführt ist und Materialausnehmungen aufweist.

10. Werkzeugträger nach einem der vorstehend genannten Ansprüche,
**dadurch gekennzeichnet, dass**
der fachwerkartig gestaltete Schwenkrahmen (7) einen zur Umsetzung des Schwenkvorganges ansteuerbaren, ein Getriebe (22) aufweisenden Antrieb (23) und ein Temperiergerät (24) aufnimmt.

11. Werkzeugträger nach Anspruch 10,
**dadurch gekennzeichnet, dass**
zur Umsetzung der Antriebs- und Getriebefunktion ein Servogetriebemotor vorhanden ist.

12. Werkzeugträger nach einem der vorstehend genannten Ansprüche,
**dadurch gekennzeichnet, dass**
der Schwenkrahmen (7) zur schwenkbaren Lagerung des Werkzeugträgers (1) koaxial zueinander angeordnete Gleitlagerbuchsen (25, 26) aufweist.

13. Werkzeugträger nach einem der vorstehend genannten Ansprüche,
**dadurch gekennzeichnet, dass**
der Schwenkrahmen (7) an wenigstens einer seiner frei zugänglichen Außenoberflächen einen Pneumatik- oder Hydraulikverteiler mit mehreren Anschlüssen aufweist.

14. Fertigungsanlage mit einem Werkzeugträger (1) nach einem der vorstehend genannten Ansprüche, aufweisend:
- einen Werkzeugroboter zur Handhabung des Werkzeugträgeroberteils (2),
- einen Schäumroboter zum Eintrag eines zum Aufschäumen geeigneten Reaktionsgemischs in das geöffnete Werkzeugunterteil (5) oder in das geschlossene Fertigungswerkzeug und
- eine Computersteuerung,
**dadurch gekennzeichnet, dass**
das Werkzeugoberteil (3) schwenkbar mit dem Werkzeugträgeroberteil (2) und/oder das Werkzeugunterteil (5) schwenkbar mit dem Werkzeugträgerunterteil (4) in dem Werkzeugträger (1) aufgenommen ist, sodass eine für die Bestückung optimale Position des Werkzeugoberteils (3) und/oder des Werkzeugunterteils (5) einstellbar ist.

15. Fertigungsanlage nach Anspruch 14,
**dadurch gekennzeichnet, dass**
das Werkzeugoberteil (3) und/oder das Werkzeugunterteil (5) stufenlos schwenkbar ist beziehungsweise diese stufenlos schwenkbar sind.

16. Fertigungsanlage nach einem der Ansprüche 14 oder 15,
**dadurch gekennzeichnet, dass**
die Fertigungsanlage modular zusammengesetzt oder aufgebaut ist.

17. Fertigungsanlage nach einem der Ansprüche 14 bis 16,
**dadurch gekennzeichnet, dass**
die Fertigungsanlage ein Werkzeugmagazin zur Aufnahme des Werkzeugträgers (1) mit dem Fertigungswerkzeug aufweist und das Werkzeugmagazin über wenigstens eine Energieschnittstelle zur Verbindung mit mindestens einer Energieschnittstelle (11, 12) des Werkzeugträgers (1) oder des Fertigungswerkzeugs verfügt, sodass beim Absetzen des Werkzeugträgers (1) in dem Werkzeugmagazin eine aktive Verbindung gegeben ist.

## Claims

1. Tool carrier (1),
having a tool carrier upper part (2), in which a tool upper part (3) is accommodated,
and having a tool carrier lower part (4), which can be coupled releasably to the tool carrier upper part (2) and in which a tool lower part (5) is accommodated,
wherein the tool upper part (3) and the tool lower part (5) together form a manufacturing tool for producing a composite workpiece having at least one foam layer formed by a foaming reaction mixture,
and the tool carrier (1) is mounted in a pivoting frame (7) so as to be pivotable about an axis (6), **characterized in that**
the tool carrier upper part (2) has at least one tool changer (8) for the coupling of a tool robot, the tool carrier upper part (2) and the tool carrier lower part (4) are movable toward each other only in the vertical direction for opening and closing purposes, for which purpose there are guide columns (14) and guide bushings (15) suitable for this purpose on the tool carrier (1) and, when the tool carrier (1) is assembled, the guide columns (14) are inserted into the guide bushings (15), and
the tool carrier lower part (4) has a clamping plate (20) which is made of a lightweight material and is mounted in a floating manner on an air cushion, which is filled with compressed air, for producing a closing pressure between the tool lower part (5) and the tool upper part (3) and for the controlled release of said closing pressure, wherein there are vertical guide elements (21) for vertically guiding the clamping plate (20) in the tool carrier lower part (4).

2. Tool carrier (1) according to Claim 1,
**characterized in that**
the tool carrier (1) has a temperature control device.

3. Tool carrier according to Claim 1 or 2,
**characterized in that**
the tool carrier upper part (2) and the tool carrier lower part (4) are mounted in the tool carrier (1) so as to be pivotable about a respective axis.

4. Tool carrier according to one of the aforementioned claims,
**characterized in that**
there is at least one energy interface on the tool carrier upper part (2) and at least one energy interface, which can be coupled to said energy interface, on the tool carrier lower part (4), and/or the tool changer (8) has at least one energy interface (9) which can be coupled to a corresponding energy interface (10) of the tool robot, and/or the tool carrier (1) has an energy interface (11, 12) for coupling the tool carrier (1) to an energy interface of a tool magazine.

5. Tool carrier according to Claim 4,
**characterized in that**
the energy interfaces (9-12) are in the form of docking devices.

6. Tool carrier according to Claim 4 or 5,
**characterized in that**
the energy interfaces (9-12) comprise at least one vacuum interface and/or at least one data interface.

7. Tool carrier according to one of the aforementioned claims,
**characterized in that**,
for closing the tool carrier (1), there are locking bushings (13) into which locking bolts are inserted when the tool carrier (1) is closed.

8. Tool carrier according to one of the aforementioned claims,
**characterized in that**
the tool carrier (1) has a central connection (16) with a plurality of compressed air connections (17) and/or vacuum connections (18) and/or electrical energy connections (9) and/or pneumatic couplings and/or connections for controlling the temperature of the manufacturing tool.

9. Tool carrier according to one of the aforementioned claims,
**characterized in that**
the tool carrier (1) as a whole is configured as a lightweight design, and, for this purpose, is designed as a latticework structure and has material recesses.

10. Tool carrier according to one of the aforementioned claims,
**characterized in that**
the pivoting frame (7) which is of latticework-like configuration accommodates a drive (23) which can be activated for realizing the pivoting operation and has a transmission (22), and a temperature control device (24).

11. Tool carrier according to Claim 10,
**characterized in that**
there is a servo gear motor for realizing the drive and transmission function.

12. Tool carrier according to one of the aforementioned claims,
**characterized in that**
the pivoting frame (7) has plain bearing bushings (25, 26), which are arranged coaxially with respect to one another, for the pivotable mounting of the tool carrier (1).

13. Tool carrier according to one of the aforementioned claims,
**characterized in that**
the pivoting frame (7), on at least one of its freely accessible outer surfaces, has a pneumatic or hydraulic distributor with a plurality of connections.

14. Manufacturing system with a tool carrier (1) according to one of the aforementioned claims, having:
- a tool robot for handling the tool carrier upper part (2),
- a foaming robot for admitting a reaction mixture, which is suitable for the foaming, into the open tool lower part (5) or into the closed manufacturing tool, and
- a computer controller,
**characterized in that**
the tool upper part (3) is accommodated pivotably with the tool carrier upper part (2), and/or the tool lower part (5) is accommodated pivotably with the tool carrier lower part (4), in the tool carrier (1) such that the tool upper part (3) and/or the tool lower part (5) can be set in an optimum position for the equipping.

15. Manufacturing system according to Claim 14,
**characterized in that**
the tool upper part (3) and/or the tool lower part (5) are/is pivotable in an infinitely variable manner.

16. Manufacturing system according to either of Claims 14 and 15,
**characterized in that**
the manufacturing system is assembled or composed modularly.

17. Manufacturing system according to one of Claims 14 to 16,
**characterized in that**
the manufacturing system has a tool magazine for receiving the tool carrier (1) with the manufacturing tool, and the tool magazine has at least one energy interface for connection to at least one energy interface (11, 12) of the tool carrier (1) or of the manufacturing tool such that an active connection is provided when the tool carrier (1) is set down in the tool magazine.

## Revendications

1. Porte-outil (1), comprenant
un haut de porte-outil (2) dans lequel est reçue une partie supérieure d'outil (3),
et un bas de porte-outil (4) pouvant être couplé de manière amovible au haut de porte-outil (2) et dans lequel est reçue une partie inférieure d'outil (5),
la partie supérieure d'outil (3) et la partie inférieure d'outil (5) formant ensemble un outil de fabrication pour réaliser une pièce en matériau composite dotée d'au moins une couche de mousse formée par un mélange réactionnel moussant,
et le porte-outil (1) étant monté dans un cadre pivotant (7) de manière à pouvoir pivoter autour d'un axe (6),
**caractérisé en ce que**
le haut de porte-outil (2) présente au moins un changeur d'outil (8) pour accoupler un robot outil,
pour l'ouverture et la fermeture, le haut de porte-outil (2) et le bas de porte-outil (4) peuvent être déplacés l'un contre l'autre uniquement dans la direction verticale, des colonnes de guidage (14) et des douilles de guidage (15) assorties à celles-ci existant sur le porte-outil (1) à cet effet, et les colonnes de guidage (14) étant introduites dans les douilles de guidage (15) lorsque le porte-outil (1) est assemblé, et
le bas de porte-outil (4) présente une plaque de serrage (20) en matériau léger, montée flottante sur un coussin pneumatique rempli d'air comprimé pour produire une pression de fermeture entre la partie inférieure d'outil (5) et la partie supérieure d'outil (3) et pour relâcher de manière maîtrisée cette pression de fermeture,
des éléments de guidage vertical (21) existant dans le bas de porte-outil (4) pour le guidage vertical de la plaque de serrage (20).

2. Porte-outil (1) selon la revendication 1, **caractérisé en ce que**
le porte-outil (1) présente un régulateur de température.

3. Porte-outil selon la revendication 1 ou 2, **caractérisé en ce que**
le haut de porte-outil (2) ainsi que le bas de porte-outil (4) sont montés dans le porte-outil (1) de manière à pouvoir pivoter autour d'un axe respectivement.

4. Porte-outil selon l'une quelconque des revendications précédentes, **caractérisé en ce que** sur le haut de porte-outil (2) il existe au moins une interface d'énergie, et sur le bas de porte-outil (4) il existe au moins une interface d'énergie pouvant être couplée à celle-ci, et/ou le changeur d'outil (8) présente au moins une interface d'énergie (9) pouvant être couplée à une interface d'énergie (10) correspondante du robot outil, et/ou le porte-outil (1) présente une interface d'énergie (11, 12) pour le couplage du porte-outil (1) à une interface d'énergie d'un magasin à outils.

5. Porte-outil selon la revendication 4, **caractérisé en ce que**
les interfaces d'énergie (9 à 12) sont réalisées sous forme d'équipements d'accueil.

6. Porte-outil selon la revendication 4 ou 5, **caractérisé en ce que**
les interfaces d'énergie (9 à 12) présentent au moins une interface de vide et/ou au moins une interface de données.

7. Porte-outil selon l'une quelconque des revendications précédentes,
**caractérisé en ce que**
pour la fermeture du porte-outil (1), il existe des douilles de verrouillage (13) dans lesquelles des boulons de verrouillage sont introduits lorsque le porte-outil (1) est fermé.

8. Porte-outil selon l'une quelconque des revendications précédentes,
**caractérisé en ce que**
sur le porte-outil (1) il existe un raccord central (16) doté de plusieurs raccords d'air comprimé (17) et/ou de raccords de vide (18) et/ou de raccords d'énergie électrique (9) et/ou d'accouplements pneumatiques et/ou de raccords pour la régulation de température de l'outil de fabrication.

9. Porte-outil selon l'une quelconque des revendications précédentes,
**caractérisé en ce que**
le porte-outil (1) est globalement configuré en version légère, en étant à cet effet réalisé sous forme de construction en treillis et présentant des évidements de matériau.

10. Porte-outil selon l'une quelconque des revendications précédentes,
**caractérisé en ce que**
le cadre pivotant (7) configuré en treillis reçoit un dispositif d'entraînement (23) présentant un réducteur (22) et pouvant être piloté pour réaliser l'opération de pivotement, et un régulateur de température (24).

11. Porte-outil selon la revendication 10, **caractérisé en ce que**
il existe un servomoteur à réducteur pour réaliser la fonction d'entraînement et de réducteur.

12. Porte-outil selon l'une quelconque des revendications précédentes,
**caractérisé en ce que**
le cadre pivotant (7) présente des coussinets lisses (25, 26), disposés coaxialement les uns par rapport aux autres, pour le montage pivotant du porte-outil (1).

13. Porte-outil selon l'une quelconque des revendications précédentes,
**caractérisé en ce que**
le cadre pivotant (7) présente sur au moins l'une de ses surfaces extérieures librement accessibles un distributeur pneumatique ou hydraulique doté de plusieurs raccords.

14. Installation de fabrication, comprenant un porte-outil (1) selon l'une quelconque des revendications précédentes, présentant :
- un robot outil pour manipuler le haut de porte-outil (2),
- un robot de moussage pour introduire un mélange réactionnel apte au moussage dans la partie inférieure d'outil (5) ouverte ou dans l'outil de fabrication fermé, et
- une commande informatique,
**caractérisée en ce que**
la partie supérieure d'outil (3) est reçue de manière à pouvoir pivoter avec le haut de porte-outil (2) et/ou la partie inférieure d'outil (5) est reçue de manière à pouvoir pivoter avec le bas de porte-outil (4) dans le porte-outil (1) de sorte qu'une position optimale pour l'équipement de la partie supérieure d'outil (3) et/ou de la partie inférieure d'outil (5) peut être réglée.

15. Installation de fabrication selon la revendication 14,
**caractérisée en ce que**
la partie supérieure d'outil (3) et/ou la partie inférieure d'outil (5) est/sont pivotante(s) en continu.

16. Installation de fabrication selon l'une quelconque des revendications 14 ou 15,
**caractérisée en ce que**
l'installation de fabrication est assemblée ou composée de manière modulaire.

17. Installation de fabrication selon l'une quelconque des revendications 14 à 16,
**caractérisée en ce que**
l'installation de fabrication présente un magasin à outils pour recevoir le porte-outil (1) avec l'outil de fabrication, et le magasin à outils dispose d'au moins une interface d'énergie pour la liaison avec au moins une interface d'énergie (11, 12) du porte-outil (1) ou de l'outil de fabrication de sorte que lorsque le porte-outil (1) est déposé dans le magasin à outils, une liaison active est donnée.
